# EUROPEAN PATENT APPLICATION

(11) **EP 4 685 058 A1**
(43) Date of publication of application: **28.01.2026**
(21) Application number: 25191416.4
(22) Date of filing: 23.07.2025
(51) Int. Cl.: B64D 41/00, B64D 47/00, B64F 1/35, B64F 1/36, B64D 27/35

(54) **AIRCRAFT EXTERNAL POWER ASSEMBLY, GROUND-BASED POWER ASSEMBLY, AND METHOD FOR OPERATING SAME**

(30) Priority: 23.07.2024 US 202418781576
(71) Applicant: PRATT & WHITNEY CANADA CORP., Longueuil, Québec J4G 1A1 (CA)
(72) Inventor: SHENOUDA, Antwan, (01BE5) Longueuil, J4G 1A1 (CA); VENDITTI, David, (01BE5) Longueuil, J4G 1A1 (CA)
(74) Representative: Dehns

(57) **Abstract**

An aircraft (1000) has at least one propulsion system (20) that includes a propulsor (26), an engine (22), and an electrical assembly (24). The engine (22) is coupled to the propulsor (26) and configured to drive rotation of the propulsor (26). The electrical assembly (24) includes an electric motor (58), a battery (60), an external power assembly (64), and an electrical distribution system (62). The electric motor (58) is coupled to the propulsor (26) and configured to drive rotation of the propulsor (26). The external power assembly (64) includes a first connector (70) and a second connector (72). The first connector (70) and the second connector (72) are positionable at an exterior of the aircraft (1000). The electrical distribution system (62) electrically connects the electric motor (58), the battery (60), the first connector (70), and the second connector (72).

## Description

### TECHNICAL FIELD

This invention relates to assemblies and methods for supplying electrical power to an electrical distribution system of an aircraft propulsion system of an aircraft in a grounded condition.

### BACKGROUND OF THE ART

Hybrid-electric propulsion system architectures for aircraft may typically include one or more engines (e.g., gas turbine engines) and one or more electric motors configured to facilitate aircraft propulsion. Operation of the propulsion system (e.g., the electric motor) may consume substantial amounts of electrical power. Various systems and methods for supplying electrical power for propulsion system use are known. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the invention, an aircraft includes at least one propulsion system. The at least one propulsion system includes a propulsor, an engine, and an electrical assembly. The engine is coupled to the propulsor and configured to drive rotation of the propulsor. The electrical assembly includes an electric motor, a battery, an external power assembly, and an electrical distribution system. The electric motor is coupled to the propulsor and configured to drive rotation of the propulsor. The external power assembly includes a first connector and a second connector. The first connector and the second connector are positionable at an exterior of the aircraft. The electrical distribution system electrically connects the electric motor, the battery, the first connector, and the second connector.

In any of the aspects or embodiments described above and herein, the first connector may include a first conductive rail and the second connector may include a second conductive rail.

In any of the aspects or embodiments described above and herein, the first connector may include a first conductive coil and the second connector may include a second conductive coil.

In any of the aspects or embodiments described above and herein, the external power assembly may further include a mounting assembly. The mounting assembly may mount the first connector and the second connector to the aircraft. The first connector and the second connector may be positionable with the mounting assembly at the exterior of the aircraft.

In any of the aspects or embodiments described above and herein, the mounting assembly may bias the first connector and the second connector vertically downward at the exterior of the aircraft.

In any of the aspects or embodiments described above and herein, the aircraft may further include a landing gear assembly. The mounting assembly may be mounted to the landing gear assembly.

In any of the aspects or embodiments described above and herein, the external power assembly may further include a towed cart. The towed cart may be selectively couplable with a body of the aircraft. The first connector and the second connector may be mounted on the towed cart.

In any of the aspects or embodiments described above and herein, the towed cart may include a coupling assembly. The coupling assembly may include a towbar. The towbar may be selectively couplable with the body at the exterior of the aircraft.

According to another aspect of the invention, a ground-based power assembly includes an electrified rail, a power supply, and a controller. The electrified rail includes a first conductive rail and a second conductive rail that may extend along a ground of an aircraft transit area. The electrified rail includes a first rail portion and a second rail portion. The first rail portion includes a first portion of the first conductive rail and the second conductive rail. The second rail portion includes a second portion of the first conductive rail and the second conductive rail. The power supply is electrically connected to the first rail portion and the second rail portion. The controller is connected in signal communication with the power supply. The controller includes a processer in signal communication with a non-transitory memory storing instructions which, when executed by the processor, cause the processor to control the power supply to apply a first voltage to the first rail portion and control the power supply to apply a second voltage to the second rail portion, and the first voltage is different than the second voltage.

In any of the aspects or embodiments described above and herein, the first rail portion may be disposed at a runway of the aircraft transit area. The instructions, when executed by the processor, may further cause the processor to determine a position of an aircraft approaching the runway for landing and control the power supply to deenergize the first rail portion prior to the aircraft landing based on the position of the aircraft.

In any of the aspects or embodiments described above and herein, the instructions, when executed by the processor, may further cause the processor to control the power supply to apply a ramping voltage to the first rail portion subsequent to the aircraft landing based on the position of the aircraft.

In any of the aspects or embodiments described above and herein, the first rail portion may be disposed at a runway of the aircraft transit area. The instructions, when executed by the processor, may further cause the processor to determine a position of an aircraft transiting the runway for takeoff and control the power supply to deenergize the first rail portion prior to the aircraft separating from the runway during the takeoff.

According to another aspect of the invention, a method for supplying electrical power to an electrical distribution system of a propulsion system of an aircraft with a ground-based power assembly includes supplying electrical power to an electrified rail of the ground-based power assembly by applying a voltage to a first conductive rail and a second conductive rail of the electrified rail with a power supply, electrically connecting the electrical distribution system to the electrified rail with an external power assembly by electrically connecting a first connector and a second connector of the external power assembly with the first conductive rail and the second conductive rail, respectively, transiting the aircraft along the electrified rail with the electrical distribution system electrically connected to the electrified rail, and supplying electrical power to the electrical distribution system with the ground-based power assembly as the aircraft transits along the electrified rail.

In any of the aspects or embodiments described above and herein, electrically connecting the electrical distribution system to the electrified rail may include biasing the first connector and the second connector against the first conductive rail and the second conductive rail, respectively, with a mounting assembly mounting the first connector and the second connector to a body of the aircraft.

In any of the aspects or embodiments described above and herein, electrically connecting the electrical distribution system to the electrified rail with the external power assembly may include inductively electrically connecting the first connector and the second connector with the first conductive rail and the second conductive rail, respectively.

In any of the aspects or embodiments described above and herein, electrically connecting the electrical distribution system to the electrified rail with the external power assembly may include towing a towed cart with the aircraft. The first connector and the second connector may be disposed on the towed cart.

In any of the aspects or embodiments described above and herein, the electrified rail may include a first rail portion and a second rail portion. The first rail portion may include a first portion of the first conductive rail and the second conductive rail. The second rail portion may include a second portion of the first conductive rail and the second conductive rail. Supplying electrical power to the electrified rail may include controlling the power supply to apply a first voltage to the first rail portion and controlling the power supply to apply a second voltage to the second rail portion, and the first voltage is different than the second voltage.

In any of the aspects or embodiments described above and herein, the propulsion system may include a propulsor, an engine, and an electrical assembly. The engine may be coupled to the propulsor and configured to drive rotation of the propulsor. The electrical assembly may include an electric motor electrically connected to the electrical distribution system. The electric motor may be coupled to the propulsor and configured to drive rotation of the propulsor. Transiting the aircraft along the electrified rail with the electrical distribution system electrically connected to the electrified rail may include driving rotation of the propulsor with at least the electric motor.

In any of the aspects or embodiments described above and herein, the propulsion system may include a propulsor, an engine, and an electrical assembly. The engine may be coupled to the propulsor and configured to drive rotation of the propulsor. The electrical assembly may include an electric motor and a battery electrically connected to the electrical distribution system. The electric motor may be coupled to the propulsor and configured to drive rotation of the propulsor. Supplying electrical power to the electrical distribution system with the ground-based power assembly as the aircraft transits along the electrified rail may include charging the battery.

In any of the aspects or embodiments described above and herein, supplying electrical power to the electrified rail by applying a voltage to a first conductive rail and a second conductive rail of the electrified rail with a power supply may include identifying an electrical power capacity identifier of the aircraft, identifying a voltage value corresponding to the electrical power capacity identifier, and applying the voltage to the first conductive rail and the second conductive rail at the voltage value.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates an aircraft including a propulsion system, in accordance with one or more embodiments of the present disclosure.
FIG. 2 schematically illustrates an aircraft propulsion system and a ground-based power assembly, in accordance with one or more embodiments of the present disclosure.
FIG. 3 schematically illustrates a side view of an aircraft and an external power assembly, in accordance with one or more embodiments of the present disclosure.
FIG. 4 schematically illustrates a front view of the aircraft and the external power assembly of FIG. 3, in accordance with one or more embodiments of the present disclosure.
FIGS. 5 and 5A schematically illustrate other external power assemblies, in accordance with one or more embodiments of the present disclosure.
FIG. 6 schematically illustrates a top view of an aircraft and another external power assembly, in accordance with one or more embodiments of the present disclosure.
FIG. 7 schematically illustrates a ground-based power assembly for an exemplary airport, in accordance with one or more embodiments of the present disclosure.
FIG. 8 illustrates a block diagram depicting a method for supplying electrical power to an electrical distribution system of an aircraft propulsion system with a ground-based power assembly, in accordance with one or more embodiments of the present disclosure.

### DETAILED DESCRIPTION

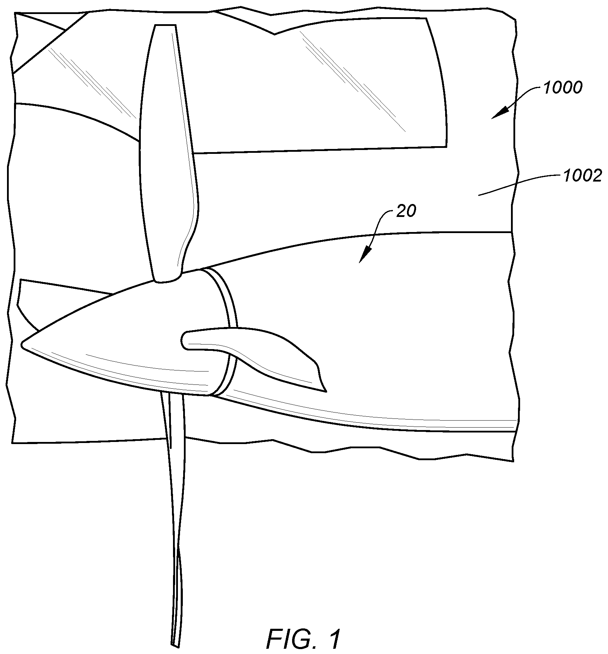

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). The propulsion system 20 is mounted to a body 1002 of the aircraft 1000 such as a fuselage, a wing, or another structural aircraft body.

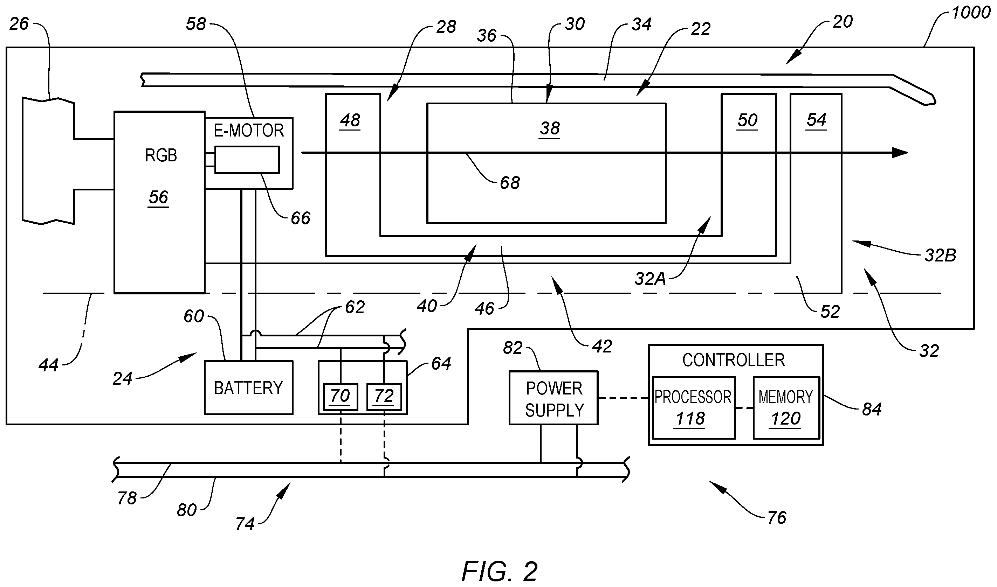

FIG. 2 schematically illustrates a cutaway, side view of the propulsion system 20. The propulsion system 20 of FIG. 1 is a hybrid-electric propulsion system including an engine 22, an electrical assembly 24, and a propulsor 26. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Moreover, the present disclosure is not limited to propulsion systems including a gas turbine engine. For example, the engine 22 may alternatively be configured as an intermittent combustion engine such as, but not limited to, a rotary engine (e.g., a Wankel engine), a piston engine, or the like.

The engine 22 of FIG. 2 includes a compressor section 28, a combustor section 30, a turbine section 32, and an engine static structure 34. The combustor section 30 includes a combustor 36 (e.g., an annular combustor). The combustor 36 forms a combustion chamber 38. The turbine section 32 includes a high-pressure turbine section 32A and a power turbine section 32B.

Components of the compressor section 28 and the turbine section 32 of FIG. 2 form a first rotational assembly 40 (e.g., a high-pressure spool) and a second rotational assembly 42 of the engine 22. The first rotational assembly 40 and the second rotational assembly 42 are mounted for rotation about a rotational axis 44 (e.g., an axial centerline) of the engine 22 relative to the engine static structure 34.

The first rotational assembly 40 includes a first shaft 46, a bladed compressor rotor 48 for the compressor section 28, and a bladed first turbine rotor 50 for the high-pressure turbine section 32A. The first shaft 46 interconnects the bladed compressor rotor 48 and the bladed first turbine rotor 50.

The second rotational assembly 42 includes a second shaft 52 and a bladed second turbine rotor 54 for the power turbine section 32B. The second shaft 52 is connected to the bladed second turbine rotor 54. The second shaft 52 operably connects (e.g., directly or indirectly connects) the bladed second turbine rotor 54 with the propulsor 26.

The engine static structure 34 includes engine casings, cowlings, and other fixed (e.g., non-rotating) structures of the engine 22 which house and/or support components of the engine 22 such as, but not limited to, those of the compressor section 28, the combustor section 30, and the turbine section 32. The engine static structure 34 of FIG. 2 includes a gear box 56 coupling the second shaft 52 and the propulsor 26. For example, the gear box 56 includes a gear assembly (e.g., an epicyclic gear assembly) coupling the second shaft 52 and the propulsor 26. The gear assembly may be a reduction gear assembly configured to drive rotation of the propulsor 26 at a reduced rotational speed relative to the second shaft 52. Of course, the second shaft 52 may alternatively be directly connected to the propulsor 26 to drive the propulsor 26 at the same rotational speed as the second shaft 52.

The electrical assembly 24 of FIG. 2 includes an electric motor 58, a battery 60, an electrical distribution system 62, and an external power assembly 64 (e.g., an electrical power assembly).

The electric motor 58 is electrically connected to the electrical distribution system 62. The electric motor 58 includes a rotor 66. The rotor 66 is coupled to the propulsor 26 by the gear box 56. For example, the gear box 56 may couple both of the second shaft 52 and the rotor 66 to the propulsor 26 to facilitate driving rotation of the propulsor 26 with the bladed second turbine rotor 54 (e.g., via the second shaft 52), the electric motor 58 (e.g., the rotor 66), or a combination of the bladed second turbine rotor 54 and the electric motor 58. The electric motor 58 may additionally include a motor control unit (e.g., an inverter) configured to control electric power characteristics (e.g., frequency, voltage, current) supplied to the electric motor 58 (e.g., windings of the electric motor 58), for example, to control a rotation speed and/or torque of the rotor 66.

The battery 60 is electrically connected to the electrical distribution system 62. The battery 60 is configured to selectively supply electrical power to the electrical distribution system 62 independently (e.g., as a single power source for the electrical assembly 24) or in combination with one or more other electrical power sources (e.g., an electrical generator) of the propulsion system 20 or the aircraft 1000 (see FIG. 1). The battery 60 may be disposed within the propulsion system 20 or within the aircraft 1000 outside of the propulsion system 20. The battery 60 may include a plurality of battery modules (e.g., battery packs), battery cells, and/or the like electrically connected together in series and/or parallel as necessary to configure the battery 60 with the desired electrical characteristics (e.g., voltage output, current output, storage capacity, etc.). The present disclosure is not limited to any particular configuration of the battery 60. The battery 60 (e.g., and its battery cells) may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

The electrical distribution system 62 electrically connects components of the electrical assembly 24. The electrical distribution system 62 includes switchgear, cables, wires, breakers, switches, electrical power conditional and/or conversion (e.g., AC to DC or DC to AC conversion) components, and/or other electrical components to effect the transfer of electrical power between components of the electrical assembly 24. For example, the electrical distribution system 62 of FIG. 2 electrically connects the electric motor 58 with the battery 60 and other electric power sources (e.g., an electrical generator) of the electrical assembly 24. The electrical distribution system 62 may additionally be electrically connected with a second propulsion system for the aircraft 1000 (e.g., for an aircraft including multiple propulsion systems). The electrical distribution system 62 may additionally include one or more electrical power controllers, for example, to control a magnitude and/or direction of electrical current flow to components of the electrical assembly 24. The electrical distribution system 62 may additionally be configured to supply electrical power to electrical loads of the aircraft 1000 such as, but not limited to, an environmental control system (ECS), landing gear actuators and other electro-mechanical actuators, lightings systems, and other electrical or electronic aircraft systems.

During operation of the propulsion system 20 of FIG. 2, ambient air enters the propulsion system 20 through an air intake into and through a core flow path 68 of the engine 22. The ambient air flow along the core flow path 68 is compressed in the compressor section 28 and directed into the combustion chamber 38. Fuel is injected into the combustion chamber 38 and mixed with the compressed air to provide a fuel-air mixture. This fuel-air mixture is ignited, and combustion products thereof flow through the high-pressure turbine section 28A and the power turbine section 28B, and are exhausted from the propulsion system 20. The bladed first turbine rotor 50 and the bladed second turbine rotor 54 rotationally drive the first rotational assembly 40 and the second rotational assembly 42, respectively, in response to the combustion gas flow through the high-pressure turbine section 28A and the power turbine section 28B. The second rotational assembly 42 (e.g., the second shaft 52) may drive rotation of the propulsor 26, for example, through the gear box 56. For example, the electric motor 58 may be selectively operated (e.g., electrically driven) to drive rotation of the propulsor 26 independently or in combination with the engine 22.

Aircraft hybrid-electric propulsion systems, such as the propulsion system 20, may use a significant amount of electrical power during taxiing, takeoff, landing, and other transit conditions of an associated aircraft 1000. During at least some transit conditions, for example, operation of an electric motor, such as the electric motor 58, to facilitate aircraft propulsion may consume a substantial amount of stored electrical energy in one or more batteries of the aircraft. As a result, the aircraft may be forced to take off with one or more batteries having a reduced state of charge, thereby limiting flight operations and/or requiring increased consumption of fuel to compensate for the reduced availability of stored electrical energy.

The external power assembly 64 includes a first connector 70 (e.g., a positive, electrical connector) and a second connector 72 (e.g., a negative, electrical connector). The first connector 70 and the second connector 72 are electrically connected to the electrical distribution system 62. For example, the first connector 70 and the second connector 72 may be electrically connected with the electric motor 58, the battery 60, and/or other electrical loads of the aircraft 1000 (see FIG. 1) and its propulsion system 20 by the electrical distribution system 62. As will be discussed in further detail, the first connector 70 and the second connector 72 are disposed at a position exterior to the aircraft 1000 and its propulsion system 20 or otherwise moveable into a position exterior to the aircraft 1000 and its propulsion system 20 (e.g., from a position interior to the aircraft 1000 and/or its propulsion system 20).

The first connector 70 and the second connector 72 are configured to be electrically connected with an electrified rail 74 of a ground-based power assembly 76, as will be discussed in further detail. As shown in FIG. 2, the electrified rail 74 includes a first conductive rail 78 (e.g., a positive, electrically conductive rail) and a second conductive rail 80 (e.g., a negative, electrically conductive rail). The first conductive rail 78 and the second conductive rail 80 may be oriented parallel to or substantially parallel to one another and laterally spaced from one another. The first connector 70 and the second connector 72 are configured to be electrically connected with the first conductive rail 78 and the second conductive rail 80, respectively, to facilitate supplying electrical power to the electrical distribution system 62 and, subsequently, the electric motor 58, the battery 60, and/or other electrical loads of the aircraft 1000 (see FIG. 1) and its propulsion system 20. The ground-based power assembly 76 further includes a power supply 82 electrically connected to the first conductive rail 78 and the second conductive rail 80. The power supply 82 is configured to supply electrical power (e.g., alternating current (AC) or direct current (DC) electrical power) to the first conductive rail 78 and the second conductive rail 80. The ground-based power assembly 76 may additionally include a controller 84.

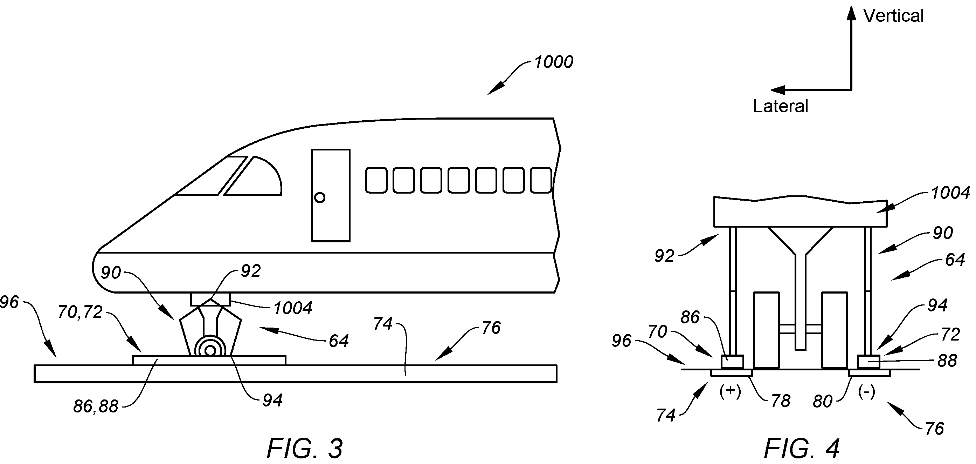

FIGS. 3 and 4 schematically illustrate an embodiment of the external power assembly 64. The first connector 70 and the second connector 72 of FIGS. 3 and 4 include a first conductive rail 86 and a second conductive rail 88, respectively. The external power assembly 64 of FIGS. 3 and 4 further includes a mounting assembly 90 mounting the first conductive rail 86 and the second conductive rail 88 to the aircraft 1000. The first conductive rail 86 and the second conductive rail 88 each include a conductive material (e.g., metal) configured to contact the first conductive rail 78 and the second conductive rail 80, respectively, to facilitate electrical connection between the external power assembly 64 and the ground-based power assembly 76 while the aircraft 1000 is stationary or in motion along the first conductive rail 78 and the second conductive rail 80. The first connector 70 and the second connector 72 may alternatively include a conducting roller, a conducting brush, a conducting sprag, or the like configured to facilitate electrical connection between the external power assembly 64 and the ground-based power assembly 76 through direct physical contact with the first conductive rail 78 and the second conductive rail 80. The mounting assembly 90 mounts the first conductive rail 86 and the second conductive rail 88 to a portion of the aircraft 1000 such that the first conductive rail 86 and the second conductive rail 88 may be disposed in contact (e.g., physical contact) with the first conductive rail 78 and the second conductive rail 80, respectively, or are otherwise movable (e.g., vertically by operation of the mounting assembly 90) to a position in contact with the first conductive rail 78 and the second conductive rail 80, respectively. The mounting assembly 90 may additionally retain and/or support electrical cables or other electrical conducting components electrically interconnecting the first connector 70 and the second connector 72 with the electrical distribution system 62 (see FIG. 2).

As shown in FIGS. 3 and 4, for example, the mounting assembly 90 may mount the first connector 70 and the second connector 72 to a landing gear assembly 1004 of the aircraft 1000. However, the present disclosure is not limited to this foregoing exemplary configuration of the external power assembly 64, and the mounting assembly 90 may alternatively mount the first connector 70 and the second connector 72 to another portion and/or component of the aircraft 1000. The mounting assembly 90 may extend (e.g., vertically extend) between an upper end 92 of the mounting assembly 90 and a lower end 94 of the mounting assembly 90. The upper end 92 of FIGS. 3 and 4 is mounted to the landing gear assembly 1004. The lower end 94 of FIGS. 3 and 4 is mounted to the first connector 70 and the second connector 72. The mounting assembly 90 of FIGS. 3 and 4 positions the first connector 70 on a first lateral side of the landing gear assembly 1004 at (e.g., on, adjacent, or proximate) the ground 96 (e.g., a runway). The mounting assembly 90 of FIGS. 3 and 4 positions the second connector 72 on a second lateral side of the landing gear assembly 1004, opposite the first lateral side, at (e.g., on, adjacent, or proximate) the ground 96. The mounting assembly 90 may have a rigid configuration such that the first connector 70 and the second connector 72 are fixed or substantially fixed relative to the landing gear assembly 1004. Alternatively, the mounting assembly 90 may have a resilient configuration such that the mounting assembly 90 biases the first connector 70 and the second connector 72 vertically downward to maintain physical contact between the first connector 70 and the second connector 72 (e.g., the first conductive rail 86 and the second conductive rail 88) and the first conductive rail 78 and the second conductive rail 80, respectively. For example, the mounting assembly 90 may include or otherwise form a pantograph for each of the first connector 70 and the second connector 72. Typically, a landing gear assembly, such as the landing gear assembly 1004, may be movable between a deployed position and a stowed position. In the deployed position, as shown in FIGS. 3 and 4, the landing gear assembly 1004 extends outward from a body of the aircraft 1000. In the stowed position, the landing gear assembly 1004 is withdrawn into an interior cavity of the aircraft 1000. The first connector 70 and the second connector 72, mounted to the landing gear assembly 1004 by the mounting assembly 90, may be movable with the landing gear assembly 1004 between the deployed and stowed position. The first connector 70, the second connector 72, and the mounting assembly 90 are shown in FIG. 3 for a forward landing gear assembly (e.g., the landing gear assembly 1004) of the aircraft 1000, however, the first connector 70, the second connector 72, and the mounting assembly 90 may alternatively be mounted to and moveable with another landing gear assembly of the aircraft 1000.

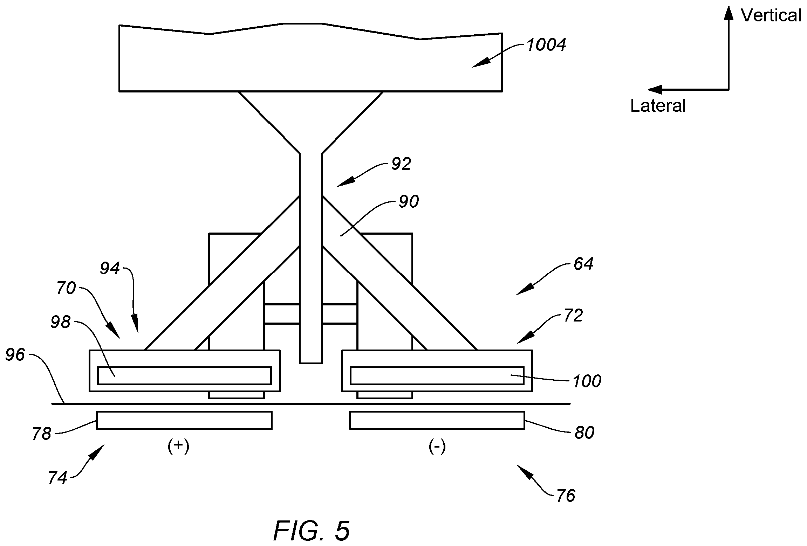

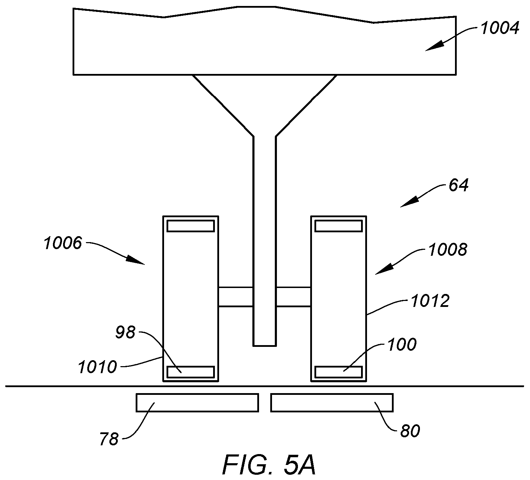

FIG. 5 schematically illustrates another embodiment of the external power assembly 64. The first connector 70 and the second connector 72 of FIG. 5 include a first conductive coil 98 and a second conductive coil 100, respectively. The first conductive coil 98 and the second conductive coil 100 of FIG. 5 are mounted to the landing gear assembly 1004 (e.g., by the mounting assembly 90), however, the present disclosure is not limited to this configuration of the first conductive coil 98 and the second conductive coil 100 with landing gear (e.g., the landing gear assembly 1004). The first conductive coil 98 and the second conductive coil 100 are configured to facilitate an inductive electrical connection between the external power assembly 64 and the ground-based power assembly 76 while the aircraft 1000 is stationary or in motion along the first conductive rail 78 and the second conductive rail 80. The mounting assembly 90 mounts the first conductive coil 98 and the second conductive coil 100 to a portion of the aircraft 1000 such that the first conductive coil 98 and the second conductive coil 100 may be disposed at (e.g., on, adjacent, or proximate) the first conductive rail 78 and the second conductive rail 80, respectively, or are otherwise movable (e.g., by operation of the mounting assembly 90) to a position at (e.g., on, adjacent, or proximate) the first conductive rail 78 and the second conductive rail 80, respectively. The first conductive coil 98 and the second conductive coil 100 facilitate inductive power transfer (e.g., contactless power transfer) from the ground-based power assembly 76 (e.g., the first conductive rail 78 and the second conductive rail 80) to the external power assembly 64. Inductive power transfer from the ground-based power assembly 76 to the external power assembly 64 may allow the first conductive rail 78 and the second conductive rail 80 to be positioned (e.g., buried) below a surface of the ground 96 or otherwise covered, thereby preventing or limiting exposure of ground personnel to the electrified conductive rails 78, 80, as well as protecting the conductive rails 78, 80 from weather and other environmental conditions. Inductive power transfer from the ground-based power assembly 76 to the external power assembly 64 may additionally facilitate reduced complexity of the mounting assembly 90, as the conductive coils 98, 100 do not have to be positioned to contact the conductive rails 78, 80. However, sufficiently large inductive power transfer from the ground-based power assembly 76 to the external power assembly 64 may require the conductive coils 98, 100 to have a substantially larger size in comparison, for example, to the conductive rails 86, 88 of FIGS. 3 and 4.

FIG. 5A schematically illustrates another embodiment of the external power assembly 64 including the first conductive coil 98 and the second conductive coil 100. The landing gear assembly 1004 of FIG. 5A includes a first wheel 1006 and a second wheel 1008 having a first tire 1010 and a second tire 1012, respectively. The first conductive coil 98 may be arranged within the first tire 1010, for example, circumferentially along an interior of a tread portion of the first tire 1010. Similarly, the second conductive coil 100 may be arranged within the second tire 1012, for example, circumferentially along an interior of a tread portion of the second tire 1012. The landing gear assembly 1004 may form a portion of an electrical power transfer path (e.g., conductive or inductive) between the conductive coils 98, 100 and the electrical distribution system 62, for example, through electrical cabling and/or electrically-conductive components of the landing gear assembly 1004 (e.g., a wheel body, wheel bearings, etc.). The conductive coils 98, 100 mounted within the tires 1010, 1012 facilitates a substantially constant distance between the conductive coils 98, 100 and the conductive rails 78, 80 as the aircraft 1000 transits along the conductive rails 78, 80.

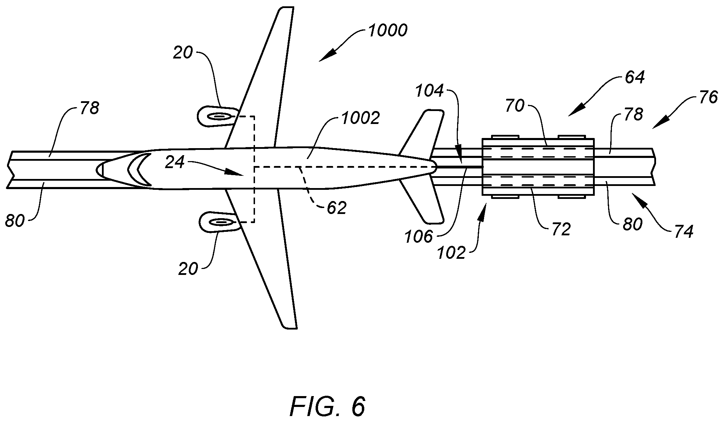

FIG. 6 schematically illustrates another embodiment of the external power assembly 64. The external power assembly 64 of FIG. 6 includes a towed cart 102 (e.g., a wheeled tow cart). The towed cart 102 is selectively coupled to the aircraft 1000 (e.g., the body 1002) by a coupling assembly 104 of the towed cart 102. The towed cart 102 of FIG. 6 is shown as being towed behind the aircraft 1000, however, the towed cart 102 may alternatively be disposed underneath, alongside, in front of, or otherwise positioned relative to the aircraft 1000. For example, the coupling assembly 104 may include a towbar 106 which extends between and couples the aircraft 1000 and the towed cart 102. The towbar 106 may be selectively couplable to facilitate decoupling of the towed cart 102 from the aircraft 1000, for example, immediately prior to aircraft 1000 takeoff. The towbar 106 may be connected in signal communication with a control system of the aircraft 1000 (e.g., a cockpit control system) to facilitate remote decoupling of the towed cart 102 from the aircraft 1000 by a pilot or other operator of the aircraft 1000. The first connector 70 and the second connector 72 are disposed on the towed cart 102. For example, the first connector 70 and the second connector 72 may be disposed along a vertical bottom of the towed cart 102. The first connector 70 and the second connector 72 are positioned on the towed cart 102 such that the first connector 70 and the second connector 72 may be positioned at (e.g., on, adjacent, or proximate) the first conductive rail 78 and the second conductive rail 80, respectively, as the aircraft 1000 pulls the towed cart 102 along the first conductive rail 78 and the second conductive rail 80. The coupling assembly 104 retains and/or supports electrical cables and/or other electrical conducting components electrically interconnecting the first connector 70 and the second connector 72 with the electrical distribution system 62, which electrical cables and/or other electrical conducting components are selectively couplable (e.g., from the electrical distribution system 62) with the coupling assembly 104.

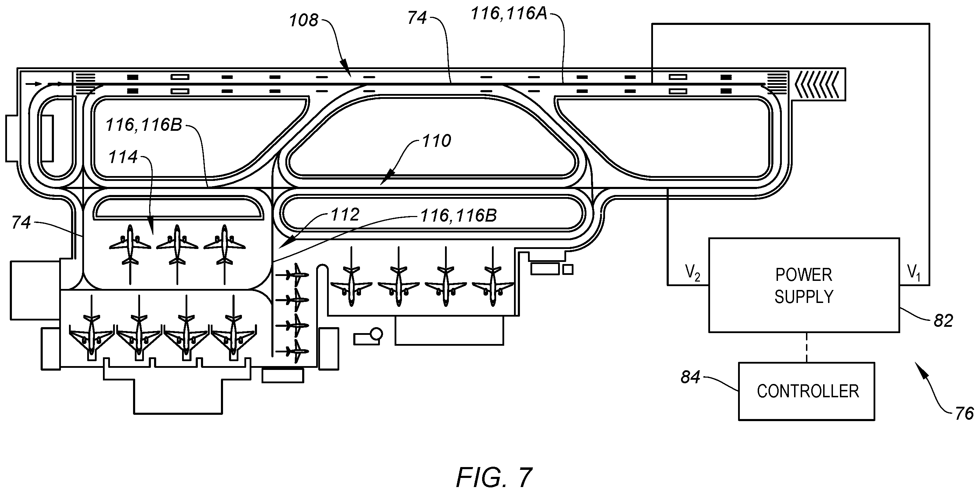

FIG. 7 schematically illustrates the ground-based power assembly 76 and its electrified rail 74 for an exemplary airport. The electrified rail 74 may extend along and between transit areas (e.g., paved aircraft transit surfaces) of the airport including, but not limited to, a runway 108, a taxiway 110, an apron 112, a ramp 114, and the like. The electrified rail 74 may extend along and parallel to a typical direction of aircraft 1000 (see FIG. 1) transit through the transit areas of the airport, for example, lengthwise along the runway 108 and the taxiway 110. The power supply 82 is electrically connected with the electrified rail 74 (e.g., the first conductive rail 78 and the second conductive rail 80) to supply electrical power therethrough. The electrified rail 74 may include a plurality of discrete (e.g., electrically independent) rail portions 116. The power supply 82 may be electrically connected to and configured to supply electrical power to each of the rail portions 116. The power supply 82 may independently control a voltage of the rail portions 116 such that one or more rail portions 116 may operate at a different voltage than one or more other rail portions 116. For example, the rail portions 116 of FIG. 7 include a first rail portion 116A and a second rail portion 116B. The first rail portion 116A extends along and through the runway 108. The second rail portion 116B extends along and through the taxiway 110, the apron 112, and the ramp 114. The power supply 82 may supply electrical power to the first rail portion 116A and the second rail portion 116B such that the first rail portion 116A operates at a first voltage which is greater than a second voltage of the second rail portion 116B. The higher first voltage of the first rail portion 116A facilitates greater electrical power transfer to the electrical assembly 24, for example, during takeoff conditions on the runway 108 for which the electric motor 58 may be consuming a significant amount of electrical power to drive rotation of the propulsor 26 for takeoff (see FIG. 2). In contrast, the lower second voltage of the second rail portion 116B may facilitate greater safety for ground personnel who may be present in the vicinity of the second rail portion 116B in the taxiway 110, the apron 112, and/or the ramp 114.

Referring again to FIG. 2, the controller 84 may be connected in signal communication with at least some components of the ground-based power assembly 76 such as, but not limited to, the power supply 82, to control and/or receive signals therefrom to perform the functions described herein. The controller 84 includes a processor 118 connected in signal communication with memory 120. The processor 118 may include any type of computing device, computational circuit, processor(s), CPU, computer, or the like capable of executing a series of instructions that are stored in the memory 120. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the ground-based power assembly 76 to accomplish the same algorithmically and/or coordination of ground-based power assembly 76 components. The memory 120 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 84. The controller 84 may include, or may be in communication with, an input device that enables a user to enter data and/or instructions, and may include, or be in communication with, an output device configured, for example to display information (e.g., a visual display or a printer), or to transfer data, etc. Communications between the controller 84 components of the ground-based power assembly 76 (e.g., the power supply 82) may be via a hardwire connection or via a wireless connection. A person of skill in the art will recognize that portions of the controller 84 may assume various forms (e.g., digital signal processor, analog device, etc.) capable of performing the functions described herein.

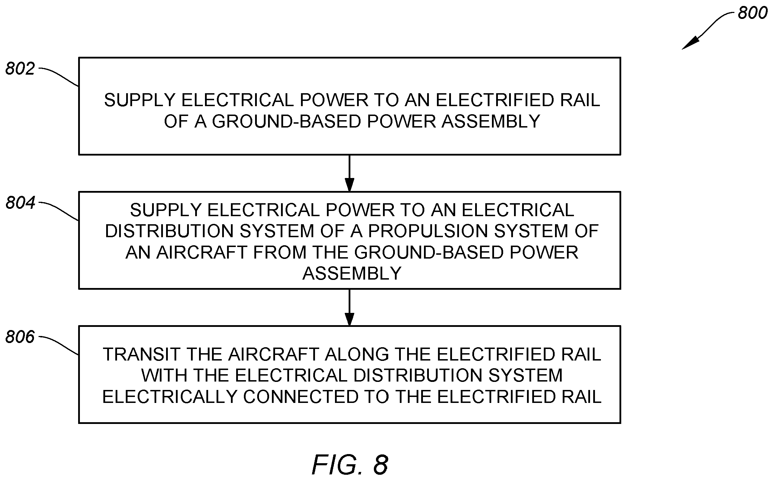

Referring to FIG. 2, 7, and 8, a method 800 for supplying electrical power to an electrical distribution system of an aircraft propulsion system with a ground-based power assembly is provided. FIG. 8 illustrates a flowchart for the method 800. The method 800 may be performed for the aircraft 1000, the propulsion system 20, the external power assembly 64, and/or the ground-based power assembly 76, as described herein. The present disclosure method 800, however, is not limited to use with the aircraft 1000, the propulsion system 20, the external power assembly 64, and/or the ground-based power assembly 76. The controller 84 (e.g., the processor 118) may execute instructions stored in the memory 120, thereby causing the controller 84 (e.g., the processor 118) to perform one or more steps or portions of steps of the method 800. Unless otherwise noted herein, it should be understood that the steps of method 800 are not required to be performed in the specific sequence in which they are discussed below and, in some embodiments, the steps of method 800 may be performed separately or simultaneously.

Step 802 includes supplying electrical power to electrified rail 74 with power supply 82. The controller 84 may control the power supply 82 to apply a voltage to the electrified rail 74 (e.g., across the first conductive rail 78 and the second conductive rail 80). The controller 84 may control the power supply 82 to apply a same or different voltage to rail portions 116 (e.g., the first rail portion 116A and the second rail portion 116B) of the electrified rail 74, as previously discussed.

In some embodiments, the controller 84 may control the power supply 82 to energize, deenergize, or vary a voltage applied to the electrified rail 74 based on a transit condition of the aircraft 1000. In particular, the controller 84 may control the power supply 82 to energize, deenergize, or vary a voltage applied to the electrified rail 74 in anticipation of an electrical connection or an electrical disconnection between the external power assembly 64 and the ground-based power assembly 76 for a given aircraft 1000 transit condition. For example, the controller 84 may control the power supply 82 to deenergize the electrified rail 74 (e.g., the first rail portion 116A) prior to (e.g., immediately prior to) electrical disconnection between the external power assembly 64 and the ground-based power assembly 76 during a takeoff of the aircraft 1000 from the runway 108. For further example, the controller 84 may control the power supply 82 to deenergize the electrified rail 74 (e.g., the first rail portion 116A) prior to (e.g., immediately prior to) electrical connection between the external power assembly 64 and the ground-based power assembly 76 during a landing of the aircraft 1000 on the runway 108 and to control the power supply 82 to energize the electrified rail 74 (e.g., the first rail portion 116A) after (e.g., immediately after) the electrical connection between the external power assembly 64 and the ground-based power assembly 76 during the landing of the aircraft 1000 on the runway 108. Alternatively, the controller 84 may control the power supply 82 to gradually increase (e.g., ramp) the voltage applied to the electrified rail 74 from a deenergized state to a predetermined voltage after (e.g., immediately after) the electrical connection between the external power assembly 64 and the ground-based power assembly 76 during the landing of the aircraft 1000 on the runway 108. In other words, the controller 84 may control the power supply 82 to apply a ramping voltage to the electrified rail 74 (e.g., the first rail portion 116A) on the aircraft 1000 has landed on the runway 108 and the first connector and the second connector 72 are electrically connected with the first conductive rail 78 and the second conductive rail 80. The controller 84 may be connected in signal communication with the aircraft 1000 (e.g., a flight control system of the aircraft 1000) to identify a position and/or trajectory of the aircraft 1000 relative to the electrified rail 74 to control (e.g., automatically control) an energization condition of the electric rail 74. Alternatively, control of the power supply 82 by the controller 84, as discussed above, may be initiated by user input to the controller 84. Controlling the power supply 82 to deenergize the electrified rail 74 in anticipation of electrical connection or electrical disconnection between the external power assembly 64 and the ground-based power assembly 76 may prevent or minimize the risk of electrical arcing between the external power assembly 64 and the ground-based power assembly 76 during electrical connection or electrical disconnection between the external power assembly 64 and the ground-based power assembly 76.

In some embodiments, the controller 84 may control the power supply 82 to apply a voltage to the electrified rail 74 at a voltage value which is specific to a particular aircraft or aircrafts (e.g., an electrical power capacity or configuration of an electrical assembly of the aircraft(s)) electrically connected with the electrified rail 74. For example, the controller 84 may identify an electrical power capacity identifier of the aircraft 1000. The electrical power capacity identifier for the aircraft 1000 may be provided to the controller 84 by a user. Alternatively, the controller 84 may be connected in signal communication with the aircraft 1000 (e.g., a control system of the aircraft 1000), and the controller 84 may receive the electrical power capacity identifier from the aircraft 1000. The electrical power capacity identifier may identify a voltage value or a range of voltage values which are suitable for the electrical distribution system 62 of the aircraft 1000. Alternatively, the controller 84 may select a voltage value (e.g., a predetermined voltage value) for the aircraft 1000 based on the electrical power capacity identifier. The controller 84 may then control the power supply 82 to apply a voltage to the first conductive rail 78 and the second conductive rail 80 at the voltage value corresponding to the electrical power capacity identifier.

Step 804 includes supplying electrical power to the electrical distribution system 62 by electrically connecting the electrical distribution system 62 to the ground-based power assembly 76 with the external power assembly 64. The first connector 70 and the second connector 72 may be positioned at (e.g., on, adjacent, or proximate) the first conductive rail 78 and the second conductive rail 80, respectively, as previously discussed. For example, with the aircraft 1000 positioned along (e.g., centered on) the electrified rail 74, the mounting assembly 90 (see FIGS. 3-5) or the towed cart 102 may position the first connector 70 and the second connector 72 may be positioned at (e.g., on, adjacent, or proximate) the first conductive rail 78 and the second conductive rail 80, thereby forming an electrical circuit between the electrical distribution system 62 and the ground-based power assembly 76. Electrical power from the power supply 82 may be supplied to the electric motor 58, the battery 60, and/or other electrical loads of the aircraft 1000 and/or its propulsion system 20. For example, electrical power supplied to the electric motor 58 may be used by the electric motor 58 to facilitate takeoff or taxiing by rotationally driving the propulsor 26, thereby limiting or preventing the use of stored electrical energy in the battery 60 by the electric motor 58. Additionally or alternatively, for example, electrical power supplied to the battery 60 may be used for charging the battery 60. Electrical power supplied to the electrical distribution system 62 from the ground-based power assembly 76 may be in the form of alternating current (AC) electrical power or direct current (DC) electrical power. Supplying electrical power to the electrical distribution system 62 may include converting the electrical power from AC to DC or from DC to AC, stepping up or stepping down the electrical power voltage, or otherwise conditioning the electrical power (e.g., with components of the electrical distribution system 62 and/or the external power assembly 64) as needed for the various electrical loads of the electrical distribution system 62. In some embodiments, step 804 may additionally or alternatively include supplying electrical power from the electrical distribution system 62 to the ground-based power assembly 76 by electrically connecting the electrical distribution system 62 to the ground-based power assembly 76 with the external power assembly 64. For example, the external power assembly 64 may facilitate the transfer of excess electrical power from the aircraft 1000 and/or the battery 60 to the ground-based power assembly 76.

Step 806 includes controlling the propulsion system 20 to effect transit of the aircraft 1000 while the electrical distribution system 62 is electrically connected with the ground-based power assembly 76. The aircraft 1000 may transit along the electrified rail 74, for example, on the runway 108, the taxiway 110, the apron 112, the ramp 114, or the like while the first connector 70 and the second connector 72 are electrically connected with the first conductive rail 78 and the second conductive rail 80, respectively, to facilitate the supply of electrical power to the electrical distribution system 62 during taxiing, takeoff, landing, and other transit conditions of the aircraft 1000. Of course, electrical power from the ground-based power assembly 76 may be supplied to the electrical distribution system 62 while the aircraft 1000 is stationary as well. Accordingly, aspects of the present disclosure may facilitate aircraft 1000 takeoff with the battery 60 in a fully-charged state or nearly fully-charged state, or may otherwise reduce discharging of the battery 60 prior to and during aircraft 1000 taxiing and takeoff, thereby providing greater availability of electrical energy stored in the battery 60 during flight.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An aircraft (1000) comprising at least one propulsion system (20) including:
a propulsor (26);
an engine (22) coupled to the propulsor (26) and configured to drive rotation of the propulsor (26); and
an electrical assembly (24) including an electric motor (58), a battery (60), an external power assembly (64), and an electrical distribution system (62), wherein the electric motor (58) is coupled to the propulsor (26) and configured to drive rotation of the propulsor (26), the external power assembly (64) includes a first connector (70) and a second connector (72), the first connector (70) and the second connector (72) are positionable at an exterior of the aircraft (1000), and the electrical distribution system (62) electrically connects the electric motor (58), the battery (60), the first connector (70), and the second connector (72).

2. The aircraft (1000) of claim 1, wherein the first connector (70) includes a first conductive rail (78) and the second connector (72) includes a second conductive rail (80).

3. The aircraft (1000) of claim 1 or 2, wherein the first connector (70) includes a first conductive coil (98) and the second connector (72) includes a second conductive coil (100).

4. The aircraft (1000) of any of claims 1 to 3, wherein the external power assembly (64) further includes a mounting assembly (90), the mounting assembly (90) mounts the first connector (70) and the second connector (72) to the aircraft (1000), and the first connector (70) and the second connector (72) are positionable with the mounting assembly (90) at the exterior of the aircraft (1000).

5. The aircraft (1000) of claim 4, wherein the mounting assembly (90) biases the first connector (70) and the second connector (72) vertically downward at the exterior of the aircraft (1000).

6. The aircraft (1000) of claim 4 or 5, further comprising a landing gear assembly (1004), wherein the mounting assembly (90) is mounted to the landing gear assembly (1004).

7. The aircraft (1000) of any of claims 1 to 3, wherein the external power assembly (64) further includes a towed cart (102), the towed cart (102) is selectively couplable with a body (1002) of the aircraft (1000), and the first connector (70) and the second connector (72) are mounted on the towed cart (102).

8. The aircraft (1000) of claim 7, wherein the towed cart (102) includes a coupling assembly (104), the coupling assembly (104) includes a towbar (106), and the towbar (106) is selectively couplable with the body (1002) at the exterior of the aircraft (1000).

9. A ground-based power assembly (76) comprising:
an electrified rail (74) including a first conductive rail (78) and a second conductive rail (80) configured to extend along a ground (96) of an aircraft transit area, wherein the electrified rail (74) includes a first rail portion (116A) and a second rail portion (116B), the first rail portion (116A) includes a first portion of the first conductive rail (78) and the second conductive rail (80), and the second rail portion (116B) includes a second portion of the first conductive rail (78) and the second conductive rail (80);
a power supply (82) electrically connected to the first rail portion (116A) and the second rail portion (116B); and
a controller (84) connected in signal communication with the power supply (82), the controller (84) including a processer in signal communication with a non-transitory memory (120) storing instructions which, when executed by the processor (118), cause the processor (118) to:
control the power supply (82) to apply a first voltage to the first rail portion (116A); and
control the power supply (82) to apply a second voltage to the second rail portion (116B), and the first voltage is different than the second voltage.

10. The ground-based power assembly (76) of claim 9, wherein :
the first rail portion is configured to be disposed at a runway of the aircraft transit area; and
the instructions, when executed by the processor (118), further cause the processor (118) to:
determine a position of an aircraft (1000) approaching the runway (108) for landing, and control the power supply (82) to deenergize the first rail portion (116A) prior to the aircraft landing based on the position of the aircraft (1000), optionally wherein the instructions, when executed by the processor (118), further cause the processor (118) to control the power supply (82) to apply a ramping voltage to the first rail portion (116A) subsequent to the aircraft (1000) landing based on the position of the aircraft (1000); and/or
determine a position of an aircraft (1000) transiting a runway (108) for takeoff, and control the power supply (82) to deenergize the first rail portion (116A) prior to the aircraft (1000) separating from the runway (108) during the takeoff.

11. A method for supplying electrical power to an electrical distribution system (62) of a propulsion system (20) of an aircraft (1000) with a ground-based power assembly (76), the method comprising:
supplying electrical power to an electrified rail (74) of the ground-based power assembly (76) by applying a voltage to a first conductive rail (78) and a second conductive rail (80) of the electrified rail (74) with a power supply (82);
electrically connecting the electrical distribution system (62) to the electrified rail (74) with an external power assembly (64) by electrically connecting a first connector (70) and a second connector (72) of the external power assembly (64) with the first conductive rail (78) and the second conductive rail (80), respectively;
transiting the aircraft (1000) along the electrified rail (74) with the electrical distribution system (62) electrically connected to the electrified rail (74); and
supplying electrical power to the electrical distribution system (62) with the ground-based power assembly (76) as the aircraft (1000) transits along the electrified rail (74),
optionally wherein:
electrically connecting the electrical distribution system (62) to the electrified rail (74) includes biasing the first connector (70) and the second connector (72) against the first conductive rail (78) and the second conductive rail (80), respectively, with a mounting assembly (90) mounting the first connector (70) and the second connector (72) to a body (1002) of the aircraft (1000);
electrically connecting the electrical distribution system (62) to the electrified rail (74) with the external power assembly (64) includes inductively electrically connecting the first connector (70) and the second connector (72) with the first conductive rail (78) and the second conductive rail (80), respectively; and/or
electrically connecting the electrical distribution system (62) to the electrified rail (74) with the external power assembly (64) includes towing a towed cart (102) with the aircraft (1000), and the first connector (70) and the second connector (72) are disposed on the towed cart (102).

12. The method of claim 11, wherein:
the electrified rail (74) includes a first rail portion (116A) and a second rail portion (116B), the first rail portion (116A) includes a first portion of the first conductive rail (78) and the second conductive rail (80), and the second rail portion (116B) includes a second portion of the first conductive rail (78) and the second conductive rail (80); and
supplying electrical power to the electrified rail (74) includes controlling the power supply (82) to apply a first voltage to the first rail portion (116A) and controlling the power supply (82) to apply a second voltage to the second rail portion (116B), and the first voltage is different than the second voltage.

13. The method of claim 11 or 12, wherein:
the propulsion system (20) includes a propulsor (26), an engine (22), and an electrical assembly (24), the engine (22) is coupled to the propulsor (26) and configured to drive rotation of the propulsor (26), the electrical assembly (24) includes an electric motor (58) electrically connected to the electrical distribution system (62), and the electric motor (58) is coupled to the propulsor (26) and configured to drive rotation of the propulsor (26); and
transiting the aircraft (1000) along the electrified rail (74) with the electrical distribution system (62) electrically connected to the electrified rail (74) includes driving rotation of the propulsor (26) with at least the electric motor (58).

14. The method of any of claims 11 to 13, wherein:
the propulsion system (20) includes a or the propulsor (26), a or the engine (22), and a or the electrical assembly (24), the engine (22) is coupled to the propulsor (26) and configured to drive rotation of the propulsor (26), the electrical assembly (24) includes a or the electric motor (58) and a battery (60) electrically connected to the electrical distribution system (62), and the electric motor (58) is coupled to the propulsor (26) and configured to drive rotation of the propulsor (26); and
supplying electrical power to the electrical distribution system (62) with the ground-based power assembly (76) as the aircraft (1000) transits along the electrified rail (74) includes charging the battery (60).

15. The method of any of claims 11 to 14, wherein supplying electrical power to the electrified rail (74) by applying a voltage to a first conductive rail (78) and a second conductive rail (80) of the electrified rail (74) with a power supply (82) includes:
identifying an electrical power capacity identifier of the aircraft (1000);
identifying a voltage value corresponding to the electrical power capacity identifier; and
applying the voltage to the first conductive rail (78) and the second conductive rail (80) at the voltage value.
